# EUROPEAN PATENT APPLICATION

(11) **EP 4 656 431 A1**
(43) Date of publication of application: **03.12.2025**
(21) Application number: 25173892.8
(22) Date of filing: 02.05.2025
(51) Int. Cl.: B60K 6/387, B60K 6/40, B60K 6/48, B60W 10/02, B60W 10/30

(54) **A CONTROLLED ENGINE ASSIST SYSTEM**

(30) Priority: 31.05.2024 IN 202421042528
(71) Applicant: Deere & Company, Moline, IL 61265 (US)
(72) Inventor: PS, Satyanarayana, 68163 Mannheim (DE)
(74) Representative: Stein, Stefan

(57) **Abstract**

The present invention provides a controlled engine assist system (10) for a hybrid vehicle having an Internal Combustion Engine (16), a battery (21) and a plurality of auxiliary components (20). The controlled engine assist system (10) has an input shaft (12) and an output shaft (14) which are selectively configured to be in an engaged configuration and a disengaged configuration by a clutch (18). The input shaft (12) and an output shaft (14) transmit power from an auxiliary drive unit (24), an Internal Combustion Engine (16) or from both. The clutch (18) selectively engages the input shaft (12) and the output shaft (14) based on inputs provided by a controller (30), corresponding to a plurality of predefined mode.

## Description

### FIELD OF THE INVENTION

The present invention relates to the field of transmission system for a vehicle. Particularly, the present invention relates to the field of hybrid vehicle having two sources of power.

### BACKGROUND OF THE INVENTION

Hybrid vehicle includes two power source- one from engine and another from electric power source. Power from electric power source provides power for driving auxiliary equipment. Electrification of auxiliary equipment enables decoupling of the auxiliary equipment from the engine. This allows entire power generated by the engine to be used for propulsion or for the primary function of the vehicle.

Power consumption by auxiliary equipment, such as, cooling fan, air conditioning compressors, hydraulic pump, water pump, braking systems, power steering systems, varies with change in speed of the engine and not with change in load requirement. Hence, in order to cater to the higher load requirement, the power supplied by the engine needs to be complemented with additional power. Currently, this requires oversized mechanical drives and elaborate systems. Also, there is a requirement that of a hybrid arrangement which caters multiple modes based on requirement of power.

In view of the above need, there is a requirement for a system which is compact while catering to various power distribution requirement.

### OBJECTS OF THE INVENTION

The present invention envisages achieving at least one of the following objects, thereby overcoming the drawbacks of prior art:
An object of the present invention is to ensure appropriate distribution of power from engine and electric source depending on a selected mode.
Another object of the present invention is to provide a compact system for hybrid vehicles.
Yet another object of the present invention is to facilitate multi-mode operation of the vehicle.

Other objects of the present invention will be apparent when the description of the invention is read in conjunction with the accompanying drawings. The accompanying drawings provided herein are merely illustrative and does not intend to limit the scope and ambit of the present invention.

### SUMMARY OF THE INVENTION

In accordance with the present invention there is provided a controlled engine assist system for a hybrid vehicle having an Internal Combustion Engine, a battery and a plurality of auxiliary components. The plurality of auxiliary components is rotatable in a first direction.

A clutch is selectively configured between an engaged configuration and a disengaged configuration. An auxiliary drive unit power transmittingly coupled to the auxiliary components, in a selective manner. An outer shaft power transmittingly coupling the clutch and the auxiliary components, in the selective manner. An inner shaft coaxially disposed within the outer shaft. The inner shaft is power transmittingly coupled between the Internal Combustion Engine and the clutch, in the selective manner. The inner shaft and the outer shaft is selectively coupled in an engaged configuration of the clutch. A controller selectively operates the clutch, corresponding to a plurality of predefined mode. The controller can be configured to selectively operate the clutch, corresponding to a plurality of predefined mode. The selective manner corresponds to the plurality of predefined mode. The plurality of predefined mode includes an engine start mode, a charging mode, an auxiliary drive mode and a power boost mode.

The clutch is coupled to the auxiliary drive unit by at least one of a power transmission arrangement selected from the group consisting of a belt and pulley arrangement and a gear arrangement. The auxiliary drive unit is a motor selected from the group consisting of an Induction motor, a Synchronous motor, a Brushed motor and a Brushless motor. The auxiliary drive unit is selectively operable as a motor and a generator, corresponding to the engine start mode and the charging mode. The auxiliary drive unit transmits power in the first direction and a second direction, the second direction is opposite to the first direction. The clutch is selectively shifted to the disengaged configuration in transmitting power in the second direction from the auxiliary drive unit to the auxiliary components, via the power transmission arrangement and the outer shaft. The outer shaft and the auxiliary drive unit are power transmittingly coupled, in the auxiliary drive mode. The Internal Combustion engine is in a propelling condition and an engine idling condition or an ignition OFF condition, in the auxiliary drive mode. The Internal Combustion engine and the auxiliary drive unit are power transmittingly coupled to the outer shaft via the clutch and the inner shaft, in the power boost mode. One of the auxiliary component is selectively rotatable in the second direction. One of the plurality of auxiliary components is selectively isolated from rest of the plurality of auxiliary components during rotation in the second direction.

Various features, aspects and advantages of the present invention will be apparent from the following detailed description of the invention when read in conjunction with the accompanying drawings wherein like numerals represent like components.

### BRIEF DESCRIPTION OF THE ACCOMPANYING DRAWINGS

The present invention will now be described with respect to the accompanying drawings:
**Figure 1** illustrates a controlled engine assist system, in accordance with the present invention;
**Figure 2** illustrates a side sectional view of the engine assist system, shown in **Figure 1****;** and
**Figure 3** to **Figure 10** illustrates various modes of operation of the engine assist system, in accordance with the present invention, indicating the portion A of **Figure 2****.**

### DETAILED DESCRIPTION

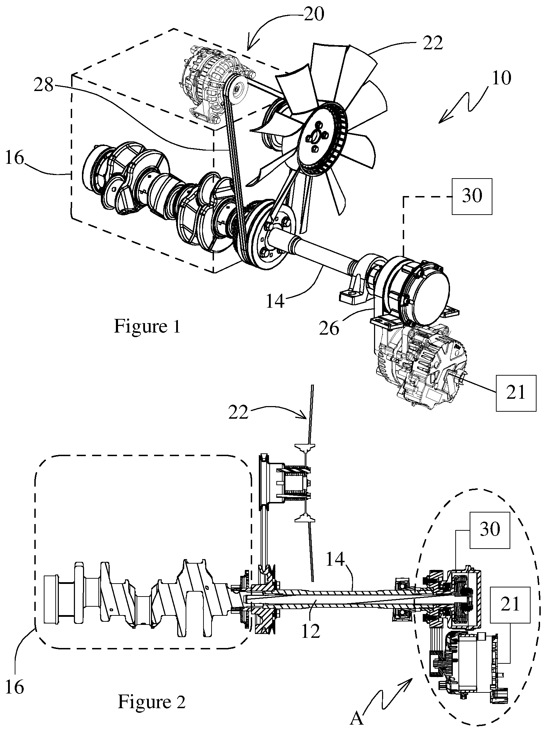

Figure 1 and Figure 2 illustrates, a controlled engine assist system (10), in accordance with the present invention. The controlled engine assist system (10) has an inner shaft (12) disposed within an outer shaft (14). The inner shaft (12) is coaxially disposed within the outer shaft (14). The inner shaft (12) connects an internal combustion engine (16) and a clutch (18). The inner shaft (12) and the outer shaft (14) are coupled by the clutch (18) based on requirement. The internal combustion engine (16) may be in a propelling condition, an engine idling condition or an ignition OFF condition. In the propelling condition, the internal combustion engine (16) provide power to propel the vehicle. In the engine idling condition and an ignition OFF condition, the internal combustion engine (16) does not provide power to propel the vehicle.

A vehicle (not shown in figure) includes a plurality of auxiliary components (20) while a hybrid vehicle includes a battery (21) for selectively providing power for operating auxiliary components as well as contributing power whenever required. The auxiliary components (20) include an AC compressor, a water pump, a radiator cooling fan (22) and an alternator. The auxiliary components (20) are rotatable in a first direction (F). While the auxiliary components (20) are required to be rotated in one direction only, however there may be a requirement of rotating one or more of the auxiliary components (20) in a second direction (S). One of the auxiliary components (20), such as, the radiator cooling fan (22), is capable of rotating in a second direction (S). The second direction (S) is opposite to the first direction (F).

An auxiliary drive unit (24) is coupled to the outer shaft (14) based on requirement. The auxiliary drive unit (24) is a motor. The motor may be an induction motor, a synchronous motor, a brushed motor or a brushless motor. The auxiliary drive unit (24) is capable of transmitting power in a first direction (F) and a second direction (S). The first direction (F) being opposite to the second direction (S). Unless otherwise specified in the below description, the power transmitted by the auxiliary drive unit (24) may be considered to be transmitted in the first direction (F). The auxiliary drive unit (24) transmits power to the auxiliary components (20), based on requirement of one or more of the auxiliary components. The auxiliary drive unit (24) is selectively coupled to the outer shaft (14) by means of the clutch (18) and a first belt arrangement (26). The first belt arrangement (26) power transmittingly couples the auxiliary drive unit (24) to the outer shaft (14). The auxiliary drive unit (14) is switchable to be operable as a motor and a generator. Additionally, the outer shaft (14) is coupled to the auxiliary components (20), such as, the radiator cooling fan (22), water pump (not shown in Figure) etc. via a second belt arrangement (28). The first belt arrangement (26) and the second belt arrangement (28) form a power transmission arrangement which is formed by a belt and pulley arrangement, as shown in the **Figure 1** to **Figure 10****.** Alternatively, the power transmission arrangement may be formed by gear arrangement.

Power from the internal combustion engine (16) and the auxiliary drive unit (24) are required to be optimally utilized based on requirement. This means that the controlled engine assist system (10) facilitates operation under predefined modes of operation based on the requirement of the vehicle. The controlled engine assist system (10) is required to be switched between the predefined modes. This is controlled by a controller (30). The controller (30) operates the clutch, corresponding to the predefined modes to facilitate switching between the modes. The predefined modes will be explained henceforth.

The plurality of predefined mode includes an engine start mode, an auxiliary drive mode, a charging mode, and a power boost mode. It is to be noted that the auxiliary drive unit (14) being a motor is configurable to transmit power while the same motor can operate as a generator for charging an on-board battery. Such auxiliary drive unit (14) which is operable as a motor as well as a generator is known in the art and such conversion and operation thereof happens in a known manner. The operation of the auxiliary drive unit (14) as a motor or a generator. The auxiliary drive unit (14) usually transmits power in the first direction (F) and is required to transmit power in a second direction (S) in certain mode, which will be explained later.

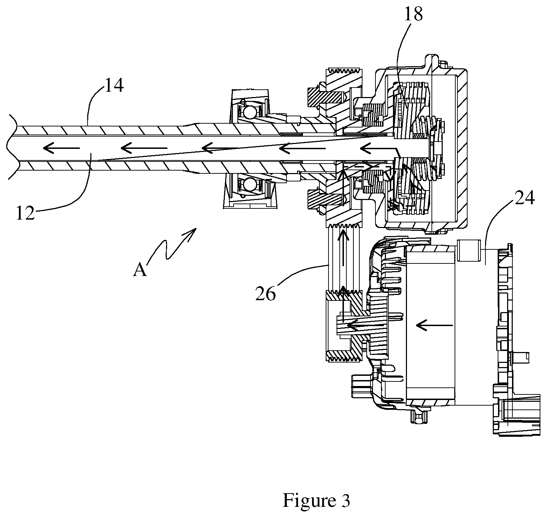

**Figure 3** illustrates the transmission of power in the engine start mode. The engine start mode is a mode wherein the internal combustion engine (16) is required to be cranked. The trigger for cranking of the internal combustion engine (16) is transmitted from the auxiliary drive unit (24) to the clutch (18) via the first belt arrangement (26). In engine start mode, the clutch (18) engages the inner shaft (12) and the outer shaft (14). This causes transmission of the power for a primary purpose of providing a starting power to the internal combustion engine (16) and also optionally coupling the outer shaft (14) for transmitting the power to the auxiliary components (20).

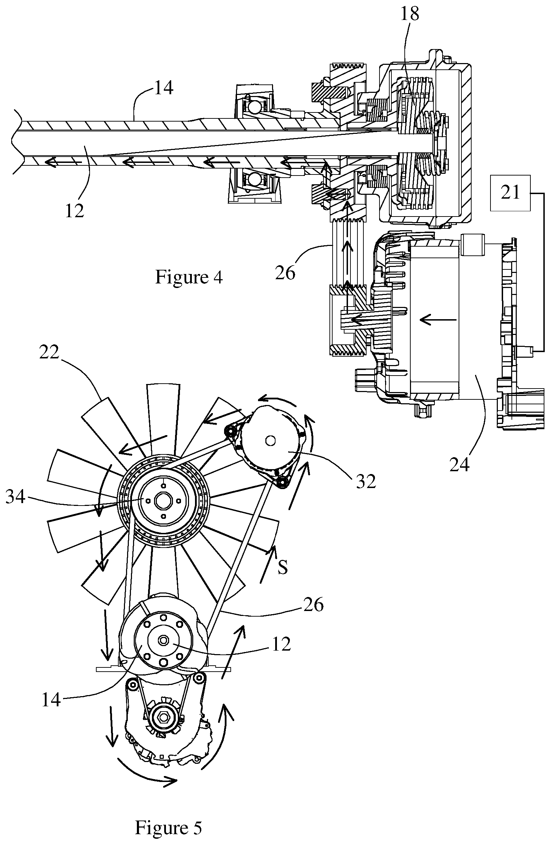

**Figure 4** illustrates the power flow in case of auxiliary drive mode wherein the auxiliary components (20) are operated by electric power transmitted by the auxiliary drive unit (24). In the auxiliary drive mode, the auxiliary drive unit (24) acts as a motor. The clutch (18) is disengaged. This means that the inner shaft (12) is isolated from the outer shaft (14). The power from the auxiliary drive unit (24) is transmitted only to the outer shaft (14) for driving the auxiliary components (20) via the first belt arrangement (26). Thus, the auxiliary components (20) are powered only by the auxiliary drive unit (24) and not by the power from the internal combustion engine (16). The radiator cooling fan (22) of the auxiliary components (20) is rotated in the first direction (F), as shown in **Figure** 5. Meanwhile, the internal combustion engine (16) may be in the propelling condition. This means that the power generated by the internal combustion engine (16) facilitates in solely propelling the vehicle. Alternatively, the internal combustion engine (16) is in the engine idling condition or the ignition OFF condition.

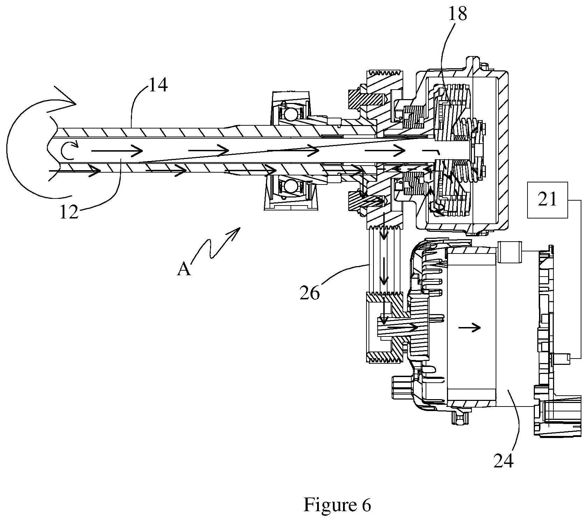

**Figure 6** illustrates the charging mode wherein the auxiliary drive unit (24) acts as a generator for charging the battery (21). In the charging mode, while the auxiliary drive unit (24) acts as a generator, the clutch (18) is engaged. Meanwhile, the internal combustion engine (16), in addition to being in the propelling condition to propel the vehicle or the engine idling condition, a part of the power from the internal combustion engine (16) is transmitted from the inner shaft (12) to the outer shaft (14) via the clutch (18) and further to the auxiliary drive unit (24) via the first belt arrangement (26). The power from the internal combustion engine (16) is transmitted to the auxiliary drive unit (24) via the first belt arrangement (26), acting as a generator for charging the battery (21). Simultaneously, the power from the internal combustion engine (16) may be transmitted for propelling the vehicle, performing required functions or operating the auxiliary components (20). The radiator cooling fan (22) of the auxiliary components (20) is rotated in the first direction (F), in the charging mode also.

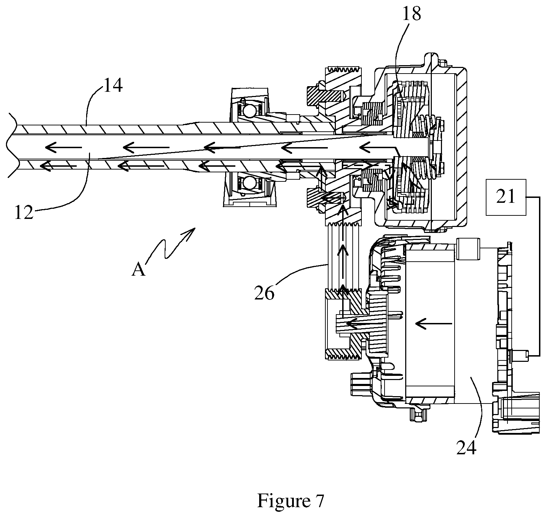

**Figure 7** illustrates the power boost mode wherein both the auxiliary drive unit (24) and the internal combustion engine (16) generates power which is supplied to propel the vehicle as well as operate the auxiliary components (20), which includes the radiator cooling fan (22) in the first direction (F). This means that the clutch (18) is engaged. This facilitates transmission of power generated by the internal combustion engine (16) from the inner shaft (12) to the outer shaft (14). Additionally, power generated by the auxiliary drive unit (24) is also fed through the first belt arrangement (26). With the additional power, the vehicle can be propelled at a higher speed or provide additional power for specific requirements.

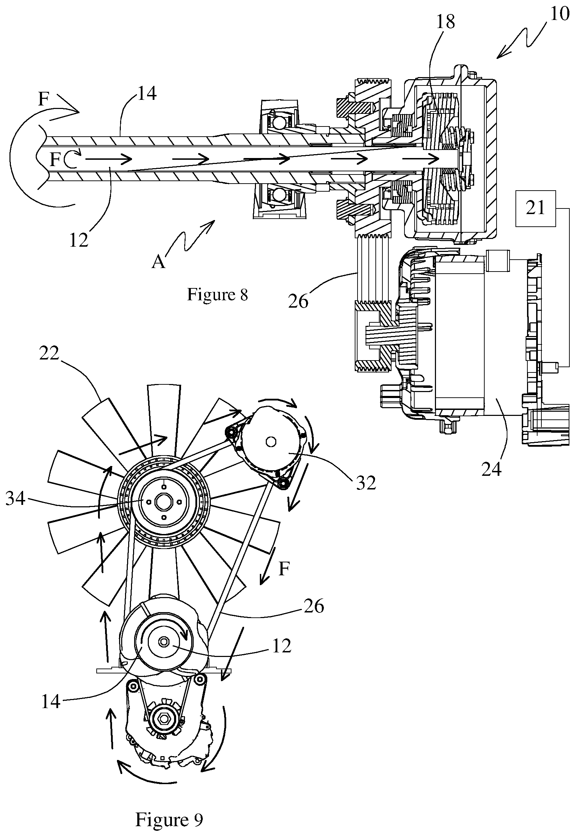

In addition to the modes discussed above, the auxiliary drive unit (24) may be decoupled to eliminate transmission of power from and to the auxiliary drive unit (24). The power flow path in the decoupled configuration of the auxiliary drive unit (24) is shown in **Figure 8****.** In the decoupled configuration of the auxiliary drive unit (24), the power from the internal combustion engine (16) is transmitted for performing a specific and primary activity. Such specific and primary activity may be propelling the vehicle or in case of off-road vehicle performing any non-propelling functions. This also means that the auxiliary components (20) may be coupled or decoupled based on demand or requirement and rotatable in the first direction (F). Hence, the clutch (18) may be engaged or disengaged based on the whether the auxiliary components (20) are coupled or decoupled, respectively.

Now, in the event of certain applications wherein the grills provided on the hood of vehicle, example, in case of a tractor, is clogged with material, such as, chaff or dirt. These situations may arise as a result of the circumstances or environment under which the vehicle is operated. In such situations, the material clogging the hood is required to be removed. It is a known technology to reverse the direction of rotation of the blades of the radiator cooling fan (22) to reverse the direction, that is in the second direction (S). In the current invention, direction of rotation of the radiator cooling fan (22) is reversed by providing an overrunning alternator pulley (OAP) (32), as shown in **Figure 9****,** associated with the radiator cooling fan (22). Additionally, the remaining auxiliary components (20) are provided with an one-way clutch (34), thereby preventing the remaining auxiliary components, other than the radiator cooling fan (22) to continue to be receive power in the first direction (F). This helps in isolating the radiator cooling fan (22) during the period of reversing the direction of the power transmitted from the first direction (F) to the second direction (S).

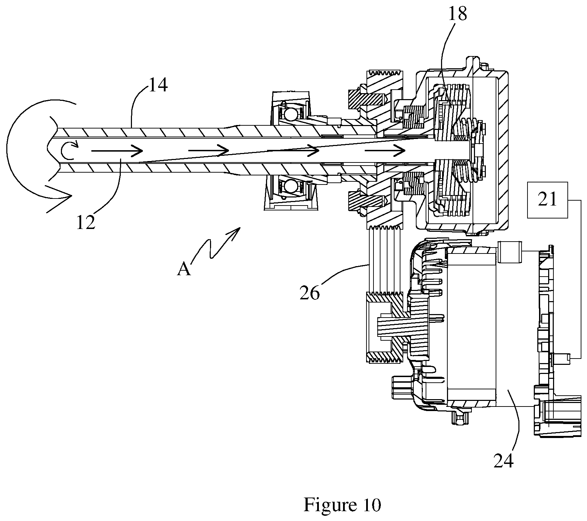

The power required for rotating the radiator cooling fan (22) is provided by the auxiliary drive unit (24), as illustrated in the power transmission flow shown in **Figure 10****.** When the radiator cooling fan (22) is reversed, the clutch (18) is disengaged, thereby preventing transmission of power between the input shaft (12) and the output shaft (14). The power from the internal combustion engine (16) propels the vehicle and enables required operation to be performed by the vehicle via the inner shaft (12). On the other hand, the power from the auxiliary drive unit (24), is transmitted to the auxiliary components (20) via the first belt arrangement (26) and the outer shaft (14). On actuation of the OAP (32) and the one-way clutch (34), the radiator cooling fan (22) is momentarily operated in the second direction (S). This facilitates blowing the materials clogging the hood of the vehicle away from the vehicle. Meanwhile, the other auxiliary components (20) continue to be operated in the first direction (S). Once the auxiliary drive unit (24) transmits power in the second direction (S), the one-way clutch (34) is engaged. The power in the second direction (S) is transmitted to the outer shaft (14) and thereafter to the radiator cooling fan (22).

Referring to **Figure 1** to **Figure 10****,** the controller (30) helps in switching based on input received from an operator of the vehicle or signals received from sensors, corresponding to operation required to be carried out by the vehicle. As an example, when the controlled engine assist system (10) is used in a tractor, the controller (30) enables an engine start mode, an auxiliary drive mode, a charging mode, a power boost mode or any of the aforementioned modes, based on operation to be carried out in the field or traversing the tractor between destinations. For example, in case an increase in temperature is detected under the hood to indicate a clogging of the grill, the radiator cooling fan (22) is reversed by the power transmission flow shown in **Figure 10****,** as described above.

Thus, the controlled engine assist system (10) of the present invention facilitates switching between different modes for transmission of power in a hybrid vehicle. A key advantage of the controlled engine assist system (10) is the capability of reversing the radiator cooling fan (22) while internal combustion engine (16) continues to propel the vehicle without any down time.

### TECHNICAL ADVANCEMENT

The present invention has several technical advancements, including but not limited to the realization of:
➢ switching between different modes for transmission of power in a hybrid vehicle;
➢ facilitating seamless division of power based on power demand;
➢ facilitating multi-mode operation of the vehicle; and
➢ reversing the radiator cooling fan while internal combustion engine continues to propel the vehicle without any down time.

While the foregoing specification has been described with respect to at least one embodiment, the present invention can be further modified within the spirit and scope of this invention. This application is therefore intended to cover any variations, uses, or adaptations of the invention using its general principles. Further, this application is intended to cover such departures from the present invention which comes within known or customary practice in the art to which this invention pertains.

## Claims

1. A controlled engine assist system (10) for a hybrid vehicle having an Internal Combustion Engine (16), a battery (21) and a plurality of auxiliary components (20), the plurality of auxiliary components (20) being rotatable in a first direction (F), said system (10) comprising:
a clutch (18) selectively configured between an engaged configuration and a disengaged configuration;
an auxiliary drive unit (24) power transmittingly coupled to said auxiliary components (20), in a selective manner;
an outer shaft (14) power transmittingly coupling said clutch (18) and said auxiliary components (20), in said selective manner;
an inner shaft (12) coaxially disposed within said outer shaft (14), said inner shaft (12) being power transmittingly coupled between said Internal Combustion Engine (16) and said clutch (18), in said selective manner, said inner shaft (12) and said outer shaft (14) being selectively coupled in an engaged configuration of said clutch (18); and
a controller (30) selectively operates said clutch (18), corresponding to a plurality of predefined mode, said selective manner corresponds to said plurality of predefined mode.

2. The system (10) as claimed in claim 1, wherein said plurality of predefined mode are an engine start mode, a charging mode, an auxiliary drive mode and a power boost mode.

3. The system (10) as claimed in claim 1, wherein said clutch (18) is coupled to said auxiliary drive unit (24) by at least one of a power transmission arrangement (26 and 28) selected from the group consisting of a belt and pulley arrangement and a gear arrangement.

4. The system as claimed in claim 1, wherein said auxiliary drive unit (24) is a motor selected from the group consisting of an Induction motor, a Synchronous motor, a Brushed motor and a Brushless motor.

5. The system as claimed in claim 1, wherein said auxiliary drive unit (24) is selectively operable as a motor and a generator, corresponding to said engine start mode and said charging mode.

6. The system (10) as claimed in claim 1, wherein said auxiliary drive unit (24) transmits power in the first direction (F) and a second direction (S), said second direction (S) being opposite to the first direction (F).

7. The system (10) as claimed in claim 1, wherein said clutch (18) is selectively shifted to said disengaged configuration in transmitting power in said second direction (S) from the auxiliary drive unit (24) to at least one of the plurality of auxiliary components (20), via said power transmission arrangement (26, 28) and said outer shaft (14).

8. The system (10) as claimed in claim 1, wherein said outer shaft (14) and said auxiliary drive unit (24) are power transmittingly coupled, in said auxiliary drive mode, the Internal Combustion engine (16) being in at least one of a propelling condition and an engine idling condition and an ignition OFF condition, in said auxiliary drive mode.

9. The system (10) as claimed in claim 1, wherein the Internal Combustion engine (16) and said auxiliary drive unit (24) are power transmittingly coupled to said outer shaft (14) via said clutch (18) and said inner shaft (12), in said power boost mode.

10. The system (10) as claimed in claim 1, wherein at least one auxiliary component (20) of the plurality of auxiliary components (20) are selectively rotatable in said second direction (S).

11. The system (10) as claimed in claim 1, wherein at least one of the plurality of auxiliary components (20) is selectively isolated from rest of said plurality of auxiliary components (20).
